(19) Europäisches Patentamt
European Patent Office
Office européen des brevets

(11) Veröffentlichungsnummer: **0 203 565**
**B1**

(12) **EUROPÄISCHE PATENTSCHRIFT**

(45) Veröffentlichungstag der Patentschrift: **02.08.89**

(21) Anmeldenummer: **86107150.4**

(22) Anmeldetag: **27.05.86**

(51) Int. Cl.⁴: **B 01 J 8/14**, B 01 J 8/38, C 07 F 7/08, C 08 G 77/08, C 08 G 77/10

# (54) Kontinuierliches Verfahren zur Änderung des Molekulargewichts von Organosiliciumverbindungen.

(30) Priorität: **30.05.85 DE 3519411**

(43) Veröffentlichungstag der Anmeldung: **03.12.86 Patentblatt 86/49**

(45) Bekanntmachung des Hinweises auf die Patenterteilung: **02.08.89 Patentblatt 89/31**

(84) Benannte Vertragsstaaten: **AT BE CH DE FR GB IT LI NL**

(56) Entgegenhaltungen:
**DE-A-2 834 627**
**FR-A-2 189 453**

(73) Patentinhaber: **WACKER- CHEMIE GMBH, Prinzregentenstrasse 22, D-8000 München 22 (DE)**

(72) Erfinder: **Riederer, Manfred, Dr. Dipl.- Chem., Kreislerweg 4, D-8263 Burghausen (DE)**
Erfinder: **Piehler, Martin, Hintermehring 3, D-8261 Mehring (DE)**

**EP 0 203 565 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft ein Verfahren zur kontinuierlichen Änderung des Molekulargewichts von Organosiliciumverbindungen, die Si-gebundenen Sauerstoff enthalten, durch Kondensation und/oder Äquilibrierung unter Einsatz eines oder mehrerer die Kondensation und/oder Äquilibrierung beschleunigenden Katalysatoren in einem Reaktor, indem durch Rühren eine ringförmige Strömung erzeugt wird.

Beispielsweise aus US-3 839 388 (ausgegeben am 1. Oktober 1974 S. Nitzsche et al., Wacker-Chemie GmbH) ist es bekannt, Organosiliciumverbindungen, die Si-gebundenen Sauerstoff enthalten, mit Hilfe von Phosphornitridchloriden als die Kondensation und/oder Äquilibrierung beschleunigenden Katalysatoren kontinuierlich unter Änderung des Molekulargewichts der Organosiliciumverbindungen umzusetzen. In den dort angegebenen Beispielen wurde jeweils ein Doppelschneckenkneter gemäß GB-1 174 219 (ausgegeben am 17. Dezember 1969, Werner & Pfleiderer) als Reaktor benutzt. Ferner ist aus US-4 128 568 (ausgegeben am 5. Dezember 1978, W. Büchner et al. Bayer AG) bekannt im wesentlichen cyclische Diorganopolysiloxane mit kettenregelnden Substansen in Anwesenheit von alkalischen Katalysatoren zu hochviskosen Polydiorganosiloxanen umzusetzen. Der Reaktor besteht aus mehreren Zonen, die jeweils mit Rühr- bzw. Förderelementen derart ausgestattet sind, daß in zwei benachbarten Zonen des Reaktors jeweils entgegengesetzte Strömungen erzeugt werden können.

Es ist Aufgabe der Erfindung das Molekulargewicht von Organosiliciumverbindungen, die Si-gebundenen Sauerstoff enthalten kontinuierlich zu ändern wobei Schaumbildung im Reaktorraum weitgehend vermieden werden soll. Eine weitere Aufgabe der vorliegenden Erfindung ist es, den maximalen Füllgrad der Reaktoren zur kontinuierlichen Anderung des Molekulargewichts von Organosiliciumverbindungen, die Si-gebundenen Sauerstoff enthalten, zu erhöhen. Diese Aufgaben werden durch die vorliegende Erfindung dadurch gelöst, daß das kontinuierliche Verfahren zur Änderung des Molekulargewichts von Organosiliciumverbindungen, die Si-gebundenen Sauerstoff enthalten mittels homogenem Katalysator in einem zylinderförmigen, liegenden Reaktor durchgeführt wird, der ein Verhältnis von Länge zu Innendurchmesser von 1: bis 50 : 1 aufweist und die Reaktionsmischung von einem Rührorgan mit einem oder mehreren Rührblättern derart gerührt wird, daß auf die Reaktionsmischung eine maximale Zentrifugalbeschleunigung $b_{max}$ von mindestens 70 $m.s^{-2}$ vorzugsweise von mindestens 165 $m.s^{-2}$ ausgeübt wird.

In dem erfindungsgemäßen Verfahren zur kontinuierlichen Änderung des Molekulargewichts von Organosiliciumverbindungen, die Si-gebundenen Sauerstoff enthalten, können alle Organosiliciumverbindungen mit Si-gebundenem Sauerstoff eingesetzt werden, deren Molekulargewicht sich auch bisher kontinuierlich ändern ließ. Insbesondere seien lineare Organo(poly)siloxane der Formel

$$AO(SiR_2O)_nA,$$

cyclische Organopolysiloxane der Formel

$$(SiR_2O)_{n'}$$

bzw. Gemische von linearen oder von cyclischen Organo(poly)siloxanen oder Gemische von linearen mit cyclischen Organo(poly)siloxanen genannt.

In den Obigen Formeln bedeuten R jeweils gleiche oder verschiedene einwertige, gegebenenfalls substituierte, Kohlenwasserstoffreste, A Wasserstoff bzw. die Gruppe $-SiR_3$, wobei R die vorstehend dafür angegebene Bedeutung ist, n eine ganze Zahl im Wert von mindestens 1 und n' eine ganze Zahl im Wert von 3 bis 7. Obwohl durch derartige, häufig verwendete Formeln nicht dargestellt, können bis zu 5 Molprozent der Diorganosiloxaneinheiten durch andere, meist jedoch nur als mehr oder weniger schwer vermeidbare Verunreinigungen vorliegende Siloxaneinheiten, wic Monoorganosiloxan- und/oder $SiO_{4/2}$-Einheiten, ersetzt sein.

Beispiele für einwertige Kohlenwasserstoffreste R sind Alkylreste wie der Methyl- n-Butyl- und sec.-Butylrest; Alkenylreste wie der Vinylrest; und Arylreste wie der Phenylrest.

Beispiele für einwertige, substituierte Kohlenwasserstoffreste R sind Cyanalkylreste, wie der beta-Cyanethylrest; Halogenalkylreste, wie der 3,3,3-Trifluorpropylrest und Halogenarylreste, wie o-, m- und p-Chlorphenylreste.

Wegen der leichten Zugänglichkeit sind vorzugsweise mindestens 80 % der Anzahl der Reste R Methylreste. Die gegebenenfalls vorliegenden übrigen Reste R sind vorzugsweise Vinyl-und /oder Phenylreste.

Die Viskosität der bei dem erfindungsgemäßen Verfahren eingesetzten Organopolysiloxane beträgt meist 10 bis 1000 mPa.s bei 25°C. Organopolysiloxane dieser Viskosität und der oben angegebenen Formeln, wobei A meist Wasserstoff ist, werden meist als unmittelbare Produkte bei der Hydrolyse der entsprechenden Organochlorsilane, insbesondere von Dimethyldichlorsilan, erhalten.

Die obigen Ausführungen im Zusammenhang nit der Bedeutung von R gelten im vollen Umfang auch für die SiC-gebundenen organischen Reste der anderen im Rahmen der Erfindung einsetzbaren Organosiliciumverbindungen.

Prinzipiell ist es in dem erfindungsgemäßen Verfahren möglich, auch verzweigte Organo(poly)siloxane einzusetzen. Soll das Produkt des erfindungsgemäßen Verfahrens jedoch zu Elastomeren weiterverarbeitet werden, ist eine von Verzweigungen möglichst weitgehend freie (Poly)siloxankette der im erfindungsgemäßen Verfahren zur Änderung ihres Molekulargewichts

eingesetzten Organosiliciumverbindungen erforderlich.

Die dem erfindungsgemäßen Verfahren zur kontinuierlichen Änderungen des Molekulargewichts von Organosiliciumverbindungen, die Si-gebundenen Sauerstoff enthalten, zugrunde liegende chemische Reaktion kann durch Katalysatoren beschleunigt werden. Es sind dies in erster Linie Stoffe, die nach der Definition von Brönstedt oder Lewis als Säuren oder Basen zu bezeichnen sind. Da sich nicht gelöste Feststoffe nur schwer aus hochviskosen Ölen entfernen lassen, beschränkt sich das erfindungsgemäße Verfahren auf homogene Katalysatoren und auf Katalysatoren, die sich nach ihren Desaktivierung in der Reaktionsmischung lösen. Bevorzugt sind homogene Katalysatoren. Beispiele für solche saure Katalysatoren sind Protonsäuren wie Schwefelsäure, Chlorsulfonsäure, Selensäure, Salpetersäure, Phosphorsäuren, Borsäure, Lewis-Säuren wie Eisen(III)-chlorid, Eisen(III)-chlorid-hexahydrat, Aluminiumchlorid, Bortrifluorid, Zinkchlorid, Zinn(IV)-chlorid, Phosphornitridchloride, Aluminiumsulfat, bzw. Gemische von mindestens zwei dieser Substanzen.

Beispiele für basische Katalysatoren sind Alkalihydroxide, insbesondere Kalium- und Cäsiumhydroxid, Alkalisilanolate, Alkalialkoholate, quaternäre Ammoniumhydroxide wie Tetramethylammoniumhydroxid, Benzyltrimethylammoniumbutylat, beta-Hydroxyethyltrimethylammonium-2-ethylhexoat, quaternäre Phosphoniumhydroxide wie Tetra-n-butylphosphoniumhydroxid und Tri-n-butyl-3-[tris-(trimethylsiloxy)silyl]-n-propyl-phosphoniumhydroxid, Kaliumamid, Amine und Amingemische sowie Gemische von mindestens zwei der als basische Katalysatoren genannten Substanzen- bzw. Substanzklassen.

Je nach Wahl der als Katalysatoren dienenden Substanzen sind deren einzusetzende Mengen verschieden.

Bei dem erfindungsgemäßen Verfahren können Organosiliciumverbindungen, welche die Kettenlänge regeln, mitverwendet werden. Dabei können beliebige, die Kettenlänge regelnde Organosiliciumverbindungen eingesetzt werden, die bei den bisher bekannten Verfahren zur Änderung des Molekulargewichts von linearen oder cyclischen Organo(poly)siloxanen mitverwendet werden konnten. Beispiele für derartige, die Kettenlänge regelnde Organosiliciumverbindungen sind insbesondere solche der Formel:

$$R(SiR_2O)_mSiR_3$$

wobei R die oben dafür angegebene Bedeutung hat und m eine ganze Zahl im Wert von 1 bis 50 ist, sowie der Formel:

$$(R_3Si)_2NH$$

wobei R ebenfalls die oben dafür angegebene Bedeutung hat. Wichtige einzelne Beispiele für derartige Verbindungen sind Hexamethyldisiloxan, 1,3-Divinyl-1,1,3-3-tetramethyldisiloxan, 1,3-Dihydrogen-1,1,3,3-tetramethyldisiloxan und Hexamethyldisilazan und solche der Formel:

$$R_3SiOH$$

wobei R ebenfalls die oben dafür angegebene Bedeutung hat. Wichtige Beispiele für derartige Verbindungen sind Trimethylsilanol, Dimethylphenylsilanol, Methyldiphenylsilanol, Triphenylsilanol, Dimethylvinylsilanol, Methylphenylvinylsilanol, Diphenylvinylsiianol und dergleichen.

Die Menge von die Kettenlänge regelnder Organosiliciumverbindung hängt, wie dem Fachmann wohlbekannt, von der gewünschten Kettenlänge ab. Je größer die Menge an mitverwendeter, die Kettenlänge regelnder Organosiliciumverbindung ist, desto niedriger ist die Viskosität der erhaltenen Organopoiysiloxane. Diese Menge ist vorzugsweise mindestens so groß, daß die bei dem erfindungsgemäßen Verfahren erhaltenen Organopolysiloxane eine durchschnittliche Viskosität von 100 bis 1 Mio, mPa.s bei 25° C haben.

Der Katalysator kann vor Eintritt in den beim erfindungsgemäßen Verfahren verwendeten Reaktor in einem oder mehreren der Reaktionspartner gelöst bzw. suspendiert werden. Er kann aber auch getrennt, z. B. in Form einer Lösung oder Suspension jeweils in einer inerten Flüssigkeit zugegeben werden.

Als inerte Flüssigkeiten können beispielsweise unsubstituierte oder substituierte Kohlenwasserstoffe oder deren Gemische eingesetzt werden. Beispiele für unsubstituierte Kohlenwasserstoffe und deren Gemische sind Erdöldestillate wie Petrolether und Benzin verschiedener Siedebereiche, Pentan, Hexan, Heptan, Octan, ihre höheren Homologen und Isomerengemische; Aromaten wie Toluol und Xylole. Beispiele für substituerte Kohlenwasserstoffe sind insbesondere halogenierte Kohlenwasserstoffe wie 1,1,1-Trichlorethan und Chlorbenzol.

Das erfindungsgemäße Verfahren kann bei Raumtemperatur, also etwa 20° C, es kann aber auch bei erhöhter Temperatur durchgeführt werden. Vorzugsweise wird das Verfahren bei erhöhter Temperatur durchgeführt. Der Temperaturbereich von 80 bis 250° C, insbesondere der von 140 bis 160° C wird bevorzugt.

Das erfindungsgemäße Verfahren kann beim Druck der umgebenden Atmosphäre, also $10^5$Pa (abs.) oder etwa $10^5$Pa (abs.), es kann aber auch bei höherem oder bei niederem Druck durchgeführt werden. Um Begleitprodukte und nicht umgesetzte Ausgangsstoffe destillativ aus dem Reaktionsgemisch zu entfernen, ist es vorteilhaft, einen geringereren Druck als $10^5$Pa (abs.) anzulegen. Vorzugsweise wird bei 0.1 bis 70 000 Pa (abs.), insbesondere bei 100 bis 700 Pa (abs.) gearbeitet.

Als Begleitstoffe und nicht umgesetzte Ausgangsstoffe, die destillativ aus dem Reaktionsgemisch entfernt werden können, seien hier beispielhaft Wasser, Lösungsmittel und cyclische

Organosiloxane genannt. Wasser entsteht bei der Kondensation von Silanolgruppen. Auch wenn keine cyclischen Organosiloxane eingesetzt wurden, können diese Verbindungen im Laufe der Reaktion im Reaktionsgemisch als Nebenprodukte entstehen.

Das destillative Entfernen der genannten Stoffe aus dem Reaktionsgemich verusacht in den herkömmlichen Reaktortypen, beispielsweise im Doppelschneckenkneter gemäß GB-1 174 219, starke Schaumbildung. Um ein Überschäumen des Reaktionsgemisches aus dem Reaktor zu verhindern, mußte bisher bei relativ geringem Füllgrad des Reaktors gearbeitet werden. Während der erfindungsgemäßen Durchführung des Verfahrens wird im Reaktor durch Rühren eine ringförmige Strömung erzeugt; Schaumbildung tritt hierbei nicht oder nur in untergeordnetem Maße auf. Es kann demnach mit wesentlich höherem Füllgrad, d. h. mit einer besseren Raum-Zeit-Ausbeute, gearbeitet werden. Der Ausdruck "ringförmige Strömung" (annular flow) ist in der Technik bekannt und wird u. a. in Perry & Chilton, Chemical Engineers' Handbook, 5th Ed. in Kapitel 5 auf den Seiten 40 - 42 beschrieben.

Kernstück der im erfindungsgemäßen Verfahren eingesetzten Apparatur ist ein liegender, zylindrischer Reaktor, dessen Länge vorzugsweise größer ist als sein Innendurchmesser (Rohr). Längs durch den Reaktor läuft eine Welle, auf der ein Rührblatt oder mehrere, gegeneinander versetzte, Rührblätter angebracht sind. Das Blatt hat bzw. die Blätter haben jeweils etwa den gleichen Abstand von der Zylinderinnenwand, nämlich 30 bis 90 %, vorzugsweise 50 bis 70 % des Zylinderradius. Das Blatt bzw. die Rührblätter weisen gegenüber der Welle einen Anstellwinkel von 0 bis 45°, vorzugsweise von 0 bis 10° auf. Die Welle wird von einem Motor angetrieben. Um in der Reaktionsmischung eine ringförmige Strömung (annular flow) zu erzeugen, wird die Drehzahl der Welle so hoch gewählt, daß die Reaktionsmischung durch die Zentrifugalbeschleunigung an die Reaktorinnenwand gedrückt wird und innerhalb des vom Rohrer durchstrichenen Volumens ein von der Reaktionsmischung im wesentlichen freier Gasraum entsteht. Die dafür notwendige Drehzahl der Welle bzw. Zentrifugalbeschleunigung kann sehr leicht visuell mittels der nachstehend beschriebenen, in den Beispielen verwandten Apparatur, bestimmt werden.

Als Richtgröße kann hier die Zentrifugalbeschleunigung am von der Welle entferntesten Punkt des Rührblatts (maximale Zentrifugalbeschleunigung $b_{max}$) angegeben werden, für welche gilt:

$$b_{max} = 4\pi^2 \cdot r_{max} \cdot \nu^2$$

wobei $\pi$ die Kreiszahl, $r_{max}$ die maximale Ausdehnung des Rührbletts von der Welle in Richtung Reaktorinnenwand ist und $\nu$ für die Drehzahl der Welle steht. Zum Erzielen einer ringförmigen Strömung (annular flow) in der Reaktionsmischung werden Werte für $b_{max}$ von 70 bis 280 $ms^{-2}$, insbesondere von 165 bis 220 $ms^{-2}$ benötigt. Dies entspricht bei einem Rührer gemäß der Zeichnung mit einer Länge 3 von 5 cm ($r_{max}$ = 2,5 cm) einer Drehzahl von ca. 500 bis 1000 Upm, insbesondere 600 bis 800 Upm. Die Werte stellen Mindestwerte dar; Es können selbstverständlich wesentlich höhere Zentrifugalbeschleunigungen angewandt werden, was allerdings mit höheren Kosten verbunden ist. Das Verhältnis von Länge L zu Innendurchmesser d des Reaktors beträgt 50 : 1 bis 1 : 1, vorzugsweise 10 : 1 bis 1 : 1.

Der Reaktor besitzt vorzugsweise einen beheizbaren Mantel. An einem Ende des Rohres befinden sich die Zuleitung(en) für die Edukte und den Katalysator; am anderen Ende des Rohres hat das Rohr einen Vakuumstutzen, sowie eine Ableitung für das Produkt. In der Nähe der Innenwand können Temperaturfühler angebracht sein.

Im erfindungsgemäßen Verfahren in dem oben beschriebenen Reaktor werden die oben erwähnten Vorteile erzielt - d. h. Unterdrückung der Schaumbildung im Reaktor und dessen hoher maximaler Füllgrad - wenn die Zylinderachse des Reaktors eine Neigung von 0 bis 10°, vorzugsweise von 0 bis 5° von der Horizontalen aufweist. Eine größere Neigung, also eine größere Steigung oder ein größeres Gefälle, gemessen vom Eintrittspunkt der Ausgangsstoffe in den Reaktor kann jedoch von Vorteil sein, wenn gewünscht wird, das Verweilzeitspektrum des Reaktors auf diese Weise zu beeinflussen.

Im erfindungsgemäßen Verfahren können ein oder mehrere Ausgangsstoffe vor Eintritt in den Reaktor vorgewärmt werden. Um die Langzeitstabilität des Produkts zu gewährleisten, ist es meistens erwünscht, den Katalysator aus dem Produktgemisch zu entfernen oder ihn zu desaktivieren. Unter Reaktionsbedingungen gasförmige Katalysatoren können beispielsweise schon im Reaktor weitgehend destillativ entfernt werden; Säuren und Basen können neutralisiert werden.

Der in den folgenden Beispielen verwandte Reaktor besteht gemäß der zeichnung aus einem mit einem Heizmantel 7 versehenen Glasrohr 6 von 60 mm innendurchmesser und einer Länge von 360 mm. Er hat ein Innenvolumen von 1 017 cm. Im Rohr läuft zentrisch eine Welle 1, die von einem externen Motor 8 angetrieben wird. Auf der Welle sind rechteckige Rührblätter 2 von 50 mm Länge 3 und 30 mm Breite 4 angebracht, die keine Neigung gegenüber der Welle aufweisen. Die Rührblätter sind jeweils gegeneinander um 90° versetzt und haben jeweils einen Abstand 5 von 5 mm voneinander. Etwa in der Mitte der Längsachse des Reaktors taucht ein Thermometer 9 in das Reaktionsgemisch. Der Reaktor besitzt eine Zuleitung 10 für die Ausgangsstoffe am einen und die Ableitung 11 für das Produkt sowie einen Vakuumstutzen 12 mit Pumpenanschluß am anderen Ende des Rohres. Das Reaktionsrohr verläuft weitestgehend horizontal

(Neigungswinkel kleiner als 5).

Die Katalysatoren werden wie folgt hergestellt:

a) Phosphornitridchloride gemäß US-3 839 388

b) Tri-n-butyl-3 -trisi-[(trimethylsiloxy)silyl]-n-propylphosphoniumhydroxid (10 gewichtsprozentige Lösung):

In einem 2-1-Dreihalskolben, der mit Thermometer, Rührer und Rückflußkühler ausgestattet ist, werden 129 g (0,346 Mol) 3-Chlorpropyltris-(trimethylsiloxy)-silan und 71 g (0,351 Mol) Tri-n-butylphosphin in 1060 ml Dimethylformamid unter Rühren 24 Stunden auf 110° C erwärmt. Dann wird das Dimethylformamid bei $10^{-3}$ hPa (abs.) abdestilliert. Der Rückstand wird in 700 ml Wasser gelöst und mit 70 g $Ag_2O$ vermischt. Nach 24 Stunden wird die so erhalten Mischung filtriert, das Filtrat mit 1 742 g durch Trimethylsiloxygruppen endblockiertes Dimethylpolysiloxan mit einer Viskosität von 20 mPa.s bei 25° C vermischt und aus der so erhaltenen Mischung das Wasser bei $10^{-3}$ hPa (abs.) abdestilliert.

**Beispiel 1**

Es werden kontinuierlich 15 l/h eines Gemisches bestehend aus 100 Gewichtsteilen (103 Volumenteilen) α,ω-Dihydroxypolydimethylsiloxan einer Viskosität von 140 $mm^2$. $s^{-1}$ bei 25° C und 2,9 Gewichtsteilen (2,99 Volumenteilen) α,ω-bis-Trimethylsiloxy-Polydiorganosiloxan einer Viskosität von 20 $mm^2/s$ bei 25° C durch einen Vorwärmer von 160° C Temperatur geleitet. Dem Gemisch wird nach Verlassen des Vorwärmers 30 ppm (Teile je Million), bezogen auf das vorgewärmte Gemisch, Phosphornitridchlorid als 0,75 Gew.-%-ige Lösung in Dichlormethan eingespeist und die so entstandene Reaktionsmischung dem Reaktor zugeführt. Die Drehzahl des Rührorgans beträgt 700 Upm, seine maximale Zentrifugalbeschleunigung ($b_{max}$) demnach 134,3 m $s^{-2}$; die Innentemperatur des Reaktors wird auf 160° C gehalten. Es wird ein Druck von $10^{-3}$ h Pa (abs.) angelegt. Die mittlere Verweilzeit des Reaktionsgemisches im Reaktor beträgt 3 Minuten. Nach Neutralisation des Katalysators mit n-Butyllithium wird ein Öl mit einer Viskosität von 110 000 mPa.s erhalten. Durch Infrarotspektroskopie wird ein Restgehalt an Si-OH-Gruppen von weniger als 30 ppm bestimmt.

**Beispiel 2**

Das Verfahren von Beispiel 1 wird wiederholt mit dem Unterschied, daß statt 15 l/h eines Gemisches aus Dihydroxypolyorganosiloxan und α,ω -Trimethylsiloxy-Polydiorganosiloxan 45 l/h eines α,ω-Dihydroxypolydimethylsiloxans einer Viskosität von 140 $mm^2/s$ zusammen mil 2 ppm statt 30 ppm Phosphornitridchlorid eindosiert werden; Vorwärm- und Reaktionstemperatur betragen 145° C, der Druck im Reaktor 79,8 hPa (abs.), die mittlere Verweilzeit der Reaktionsmischung 1 Minute. Es wird ein Öl mit einer Viskosität von 81 500 mPa.s bei 25° C erhalten.

**Beispiel 3**

Das Verfahren von Beispiel 1 wird wiederholt mit dem Unterschied daß man statt 30 ppm Phosphornitridchlorid als 0,75 Gew.-%-ige Lösung in Dichlormethan nach dem Vorwärmer zuzugeben, man bereits von Eintritt in den Vorwärmer 60 g/h gemäß b) hergestellten Katalysatorlösung (entsprechend 400 ppm Tri-n-butyl-3-tris[(trimethylsiloxy)silyl-n-propyl-phosphoniumhydroxyd bezogen auf das Reaktionsgemisch vor Eintritt in den Vorwärmer zugibt und die Temperaturen des Vorwärmers und des Reaktorinnenraums bei 130° C statt 160° C hält. Nach Verlassen des Reaktors wird das Reaktionsgemisch durch einen Wärmetauscher mit einer Innentemperatur von 160° C geleitet, um den Katalysator zu desaktivieren.

Es wird ein Öl mit einer Viskosität von 105 000 mPa.s bei 25° C erhalten.

In keinem der drei Beispiele tritt nennenswerte Schaumbildung auf.

**Patentansprüche**

1. Kontinuierliches Verfahren zur Änderung des Molekulargewichts von Organosiliciunverbindungen, die Si-gebundenen Sauerstoff enthalten, hittels homogenen Katalysators in einem zylinderförmigen, liegenden Reaktor, dadurch gekennzeichnet, daß der Reaktor ein Verhältnis von Länge (L) zu Innendurchmesser (d) von 1 : 1 bis 50 : 1 hat und die Reaktionsmischung von einem Rührorgan mit einem oder mehreren Rührblättern (2), derart gerührt wird, daß auf die Reaktionsmischung eine maximale Zentrifugalbeschleunlgung ($b_{max}$) von mindestens 70 $ms^{-2}$ ausgeübt wird.

2. Verfahren nach Anspruch 1, dadurch gekennzeichnet, daß es bei einem Druck von $10^{-3}$ bis 1000 hPa (abs.) und Temperaturen von 20 bis 250° C durchgeführt wird.

3. Verfahren nach Anspruch 1 oder 2, dadurch gekennzeichnet, daß derart gerührt wird, daß auf die Reaktionsmischung eine maximale Zentrifugalbeschleunigung ($b_{max}$) von mindestens 165 m.$s^{-2}$ ausgeübt wird.

**Claims**

1. Continuous process for changing the molecular weight of organosilicon compounds which contain Si-bonded oxygen by means of a homogeneous catalyst in a cylindrical, generally horizontal reactor, characterized in that the reactor

has a ratio of length (L) to inside diameter (d) of from 1 : 1 to 50 : 1, and the reaction mixture is stirred by a stirring member having one or more stirring blades (2) in such a manner that a maximum centrifugal acceleration ($b_{max}$) of at least 70 $m.s.^{-2}$ is exerted on the reaction mixture.

2. Process according to Claim 1, characterized in that it is carried out at a pressure of from $10^{-3}$ to 1,000 hPa (abs.) and at temperatures of from 20 to 250°C.

3. Process according to Claim 1 or 2, characterized in that stirring is carried out in such a manner that a maximum centrifugal acceleration ($b_{max}$) of at least 165 $m.s.^{-2}$ is exerted on the reaction mixture.

**Revendications**

1. Procédé continu pour modifier la masse moléculaire de composés organosiliciques contenant de l'oxygène lié à Si, au moyen d'un catalyseur homogène dans un réacteur cylindrique horizontal, procédé caractérisé en ce que le réacteur a un rapport de la longueur (L) au diamètre intérieur (d) de 1 : 1 à 50 : 1, et en ce que le melange réactionnel est agité par un organe agitateur comportant une ou plusieurs pelles agitatrices (2) de telle façon qu'une accélération centrifuge maximale ($b_{max}$) d'au moins 70 $ms^{-2}$ soit exercée sur le mélange réactionnel.

2. Procédé selon la revendication 1 caractérisé en ce qu'il est exécuté sous une pression de $10^{-3}$ à 1 000 hPa (pression absolue) et à des températures de 20 à 250°C.

5. Procédé selon l'une des revendications 1 et 2, caractérisé en ce qu'on agite de telle façon qu'une accélération centrifuge maximale ($b_{max}$) d'au moins 165 $m.s^{-2}$ soit exercée sur le mélange réactionnel.

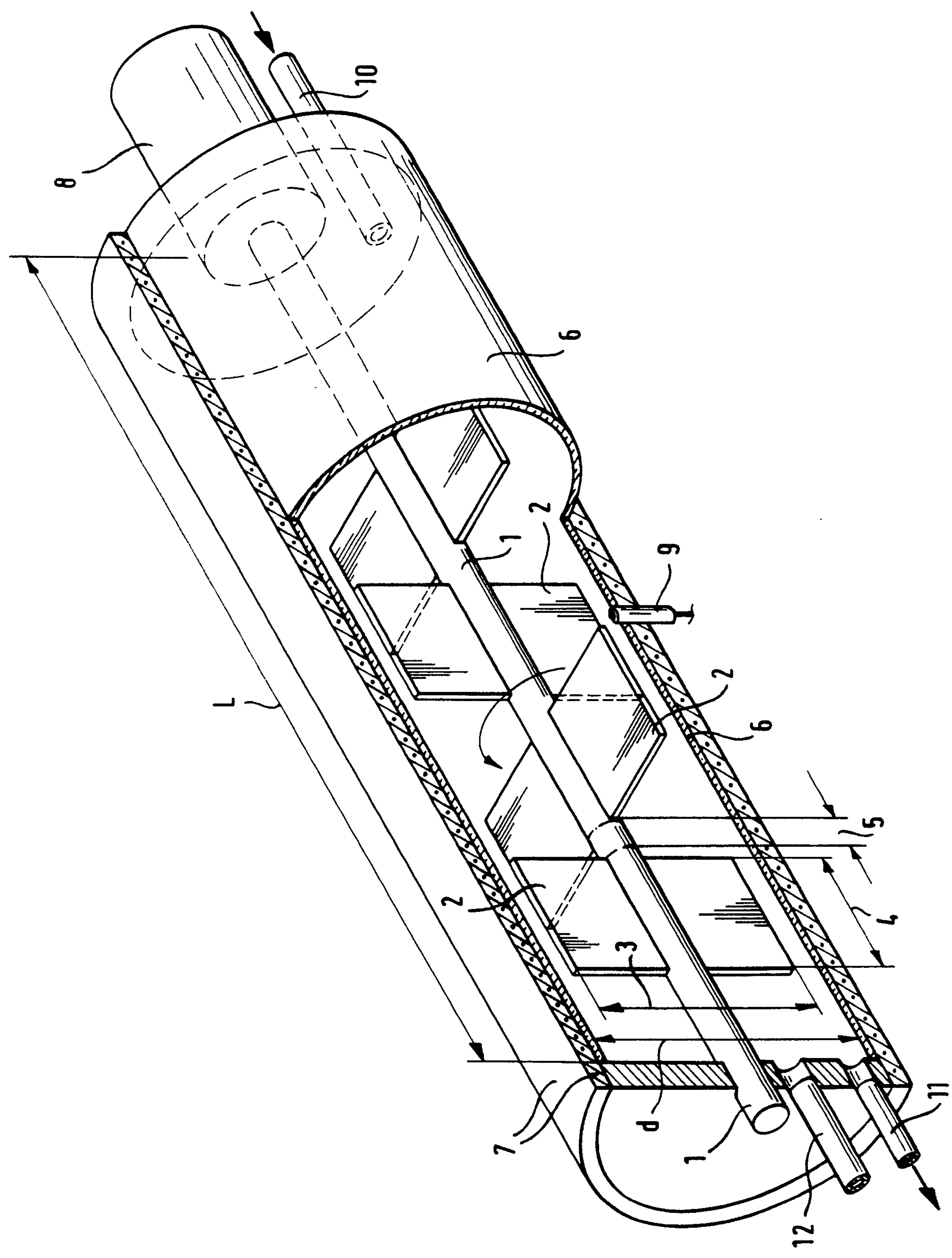
10
8
6
1
2
9
2
6
L
5
4
2
3
d
7
1
11
12